# EUROPEAN PATENT APPLICATION

(11) **EP 1 459 951 A1**
(43) Date of publication of application: **22.09.2004**
(21) Application number: 04006550.0
(22) Date of filing: 18.03.2004
(51) Int. Cl.: B60T 13/14, B60T 11/21, B62D 11/08

(54) **Valve for braking system**

(30) Priority: 18.03.2003 IT MO20030076
(71) Applicant: Studio Tecnico 6 M S.R.L., 41100 Modena (IT)
(72) Inventor: Mamei, Eronne, 41100 Modena (IT)
(74) Representative: Crugnola, Pietro

(57) **Abstract**

The valve (1) comprises body means (2) having a first seat (7) wherein a first cursor (4) is received that has a first end (206) protruding from said body means (2) and is slidable in a first direction, a second seat (13) in said body means (2) that has an outlet (9) for a fluid and wherein is received a second cursor (11) that has a second end (111) protruding from said body means (2) and is slidable in a second direction, connecting conduit means (209) that connects said first seat (7) and said second seat (13), said first (4) and second cursor (11) being conformed in such a way as to check in respective axial positions a passage of said fluid from said first seat (7) to said second seat (13) through said connecting conduit means (209) contrasting means (16) acting on said second cursor (11) in such a way as to contrast a shift of said second cursor (11) in said second direction.

## Description

The present invention concerns a valve, particularly for braking systems.

In agricultural and earth-moving machines the braking circuit is used not only for the specific function of stopping the travel of the machines but also for performing sharp steering operations.

For such purposes, both the braking system and the hydraulic circuits that supply it are normally double and are active on each side of the machine, controlled by two distinct pedals actuated by the driver that act both simultaneously and separately on a suitable distributor means to achieve, as said, braking of all the wheels or of one of the wheels on one side of the machine rather than the other.

Each machine also has its own structural features and designers refer to them to dimension the braking systems and therefore the operating pressures of the fluid, normally oil, that feed them.

At this point it must be pointed out that operating pressures are noticeably lower than the maximum pressures that are supplied by the hydraulic system of the operating machines: this difference is determined by the fact that along the hydraulic circuits pressure falls occur that are due to intrinsic passive phenomena and that, for braking actions, an intervention speed of the braking systems is required that can prevent hazardous situations.

Nevertheless, it happens that in certain emergency conditions, which are for example caused by faults that occur inside distributor means, the driver of the machine may instinctively press down hard on the pedals of the brake and this action may cause an immediate and excessive flow of fluid to the brakes at a pressure greater than operating pressure, causing sudden and sharp braking of the operating machine.

It is not currently possible for the driver to have any perception of the fact that the pressure applied to the pedals is excessive and therefore the driver cannot foresee braking conditions beyond the normal limits.

This need is currently felt both in the aforementioned emergency conditions, i.e. in the event of a fault, and in the course of normal use of the machine.

The technical task of the present invention is to improve the state of the art.

One object of the present invention is to create a valve that enables the driver to be provided with a signal that is physically clearly perceptible through the pedals of the brakes of a vehicle or of an operating machine.

This task and this object are achieved by the present valve characterised in that it comprises body means having a first seat wherein a first cursor is received that has a first end protruding from said body means and is slidable in a first direction, a second seat in said body means that has an outlet for a fluid and wherein a second cursor is received that has a second end protruding from said body means and is slidable in a second direction, connecting conduit means that interconnects said first seat and said second seat, said first and second cursor being formed in such a way as to check in respective axial positions a passage of said fluid from said first seat to said second seat through said connecting conduit means, contrast means acting on said second cursor in such a way as to contrast a shift of said second cursor in said second direction.

Further characteristics and advantages of the invention will be more clearly shown by the disclosure of a valve, illustrated by way of non-limiting example, in the attached tables of drawings wherein:
Figure 1 is a schematic longitudinal-section view of a valve, according to a first possible embodiment;
Figure 2 is a schematic longitudinal-section view of a valve according to a second possible embodiment;
Figure 3 is a schematic longitudinal-section view of the valve according to a third possible embodiment;
Figure 4 is a schematic longitudinal-section view of a valve according to a fourth possible embodiment;

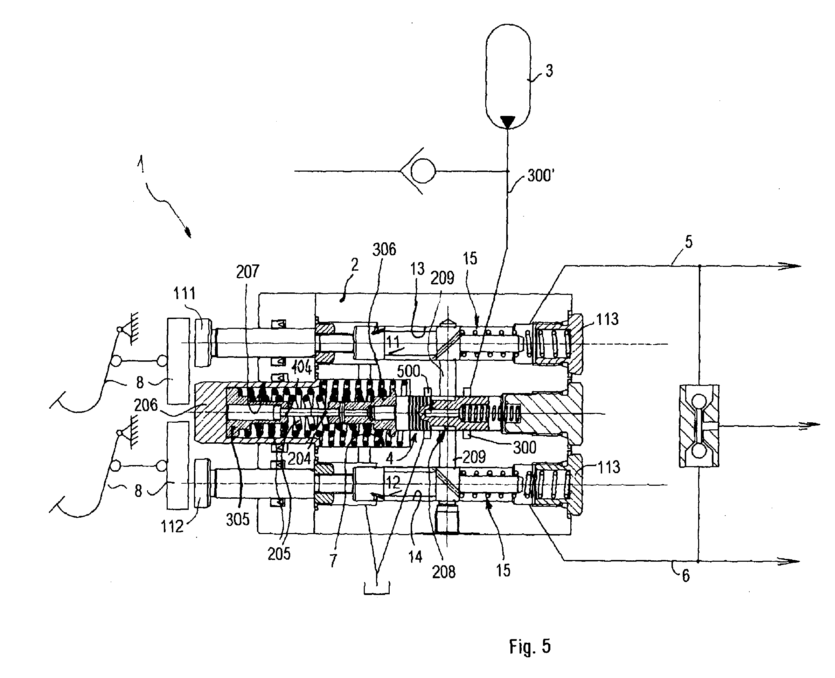

Figure 5 shows a schematic and longitudinal-section view of a valve of the conventional type;
Figure 6 shows an enlarged detail of a first cursor common to all the embodiments illustrated in figures 1, 2, 3, 4.

With particular reference to the figures, 1 indicates a valve that is for example usable in a braking system of a vehicle or of an operating machine, and which is hereinafter called valve 1 for the sake of brevity.

Valve 1 essentially comprises a valve body 2, which is fed with pressurised fluid from a first source, comprising for example one or more accumulators 3 carried on board the vehicle or the operating machine.

Within the valve body 2 a first cursor 4 is located for the guided distribution of the pressurised fluid to at least two distinct branches of a braking circuit, schematically indicated as 5 and 6 and each acting separately on the transfer organs, namely the drive and driven wheels of the vehicles or of the operating machines.

The first cursor 4 is slidingly fitted in a first seat 7 that is obtained in the valve body 2 and has one end protruding tightly outside the first seat 7, to be able to be pressed by two pedals 8 supplied with the vehicles or the operating machines for braking.

The first cursor 4 essentially comprises a central stem 404 that has a telescopic structure and consists of two coaxial elements, one, 104, is penetrated by and one, 204, penetrates the first element 104.

The latter is in turn slidingly fitted in a hollow seat 304 obtained in a first end buffer 305; the element 204 is on the other hand coaxially supported by a second buffer 306, opposite the first buffer 305: both the first buffer 305 and the second buffer 306 are an integral part of the first cursor 4 and are suitable for being pushed towards one another by the actuation of the pedals 8 until the respective ends come into contact with one another.

To elastically contrast the sliding approach of the first buffer 305 and of the second buffer 306 around the first cursor 4 a pair of helical springs 205 are provided that are reactive to compression, which are wrapped thereupon and are housed in the first seat 7, having their respective ends contained between the first buffer 305 and the second buffer 306.

The first buffer 104 and the ends of the helical springs 205 turned thereto are all contained in a bowl 206 that protrudes outside through a specific opening 207 made axially in the valve body 2.

The stem 404, at the end opposite the bowl 206, is provided with an annular groove 208 that during the sliding of the first cursor 4, is suitable for aligning itself alternatively on a feed opening 300 or an unloading opening 500, connecting these with two secondary channels 209 that connect together the first seat 7 with second seats 13 and 14, as disclosed in greater detail below.

Between the first seat 7 and the branches 5 and 6 respective connection openings are provided that are schematically indicated as 9 and 10, which are controlled by a pair of second cursors 11 and 12.

The second cursors 11 and 12 are slidingly fitted to the valve body 2, inside the previously mentioned second seats 13 and 14, which are, as said, symmetrically connected via the secondary channels 209, to the first sliding seat 7 of the first cursor 4.

The second seats 13 and 14 both have their respective ends open: through first ends thereof turned towards the pedals 8, respective heads 111 and 112 pass in a leakproof manner that are fitted to the ends turned to the pedals 8 of the second cursors 11 and 12 and which protrude outside the second seats 13 and 14; the opposite ends of the stems 11 and 12 are located in contact with elastic contrast means 15 that is loadable through compression.

At the second ends opposite said first ends of the second seats 13 and 14 elastic means 16 is fitted contrasting the active stroke of the second cursors 11 and 12, which have a pre-calibratable intervention limit.

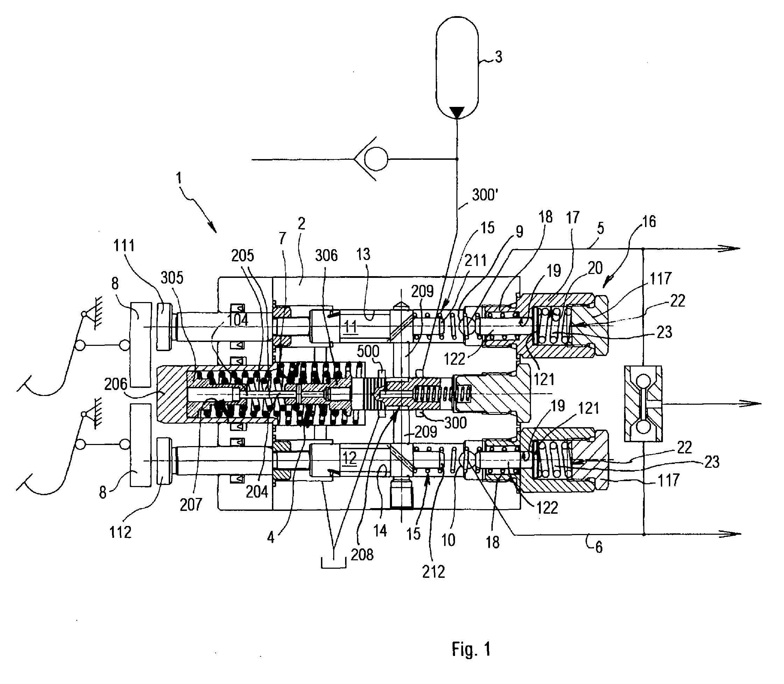

According to a first embodiment of the valve 1 illustrated in figure 1, contrasting means 16 comprises, identically for each second seat 13 and 14, a respective closing plug 17 of the respective second end, which is equipped with a threaded tang 18 that is screwable therein, with preferably micrometric pitch.

Each plug 17 has a centred and coaxial opening 19 that is turned towards the inside of the respective second seat 13 or 14, and a third hollow seat 20 that is obtained from a part opposite the tang 18 and which communicates coaxially with the opening 19; a shutter 21 is slidingly fitted therein that is shaped like a nail, the head 121 of which is received inside the third hollow seat 20 whilst the tip 122 protrudes from the opening 19, being coaxially counterposed to the concurring end of the respective second cursor 11 or 12.

The third hollow seat 20 is in turn shut by a second plug 117; inside the third hollow seat 20, positioned between the head 121 and the second plug 117, preloaded or pre-loadable elastic means 22 is provided, suitable for withstanding compression stress: elastic means 22 preferably comprises a helical spring 23.

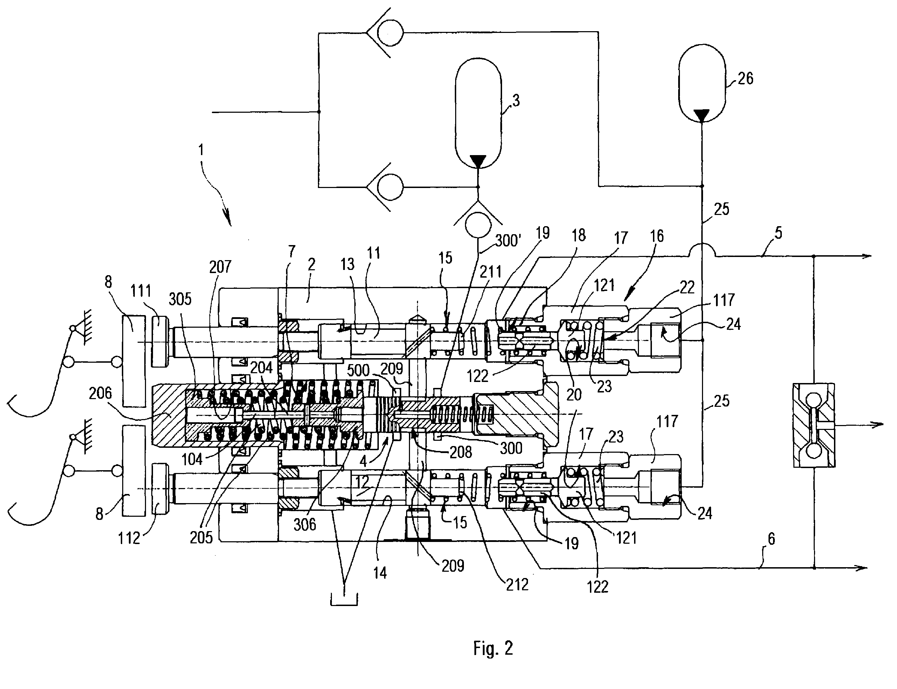

According to a second embodiment of the valve 1, illustrated in figure 2, each second plug 117 for the closure of the third seats 20 is axially crossed by a second opening 24 communicating with the exterior, to enable the attachment of a second supplementary line 25, through which further pressurised fluid coming from a second source is feedable, for example one or more second accumulators 26 carried on board the vehicles or the operating machines.

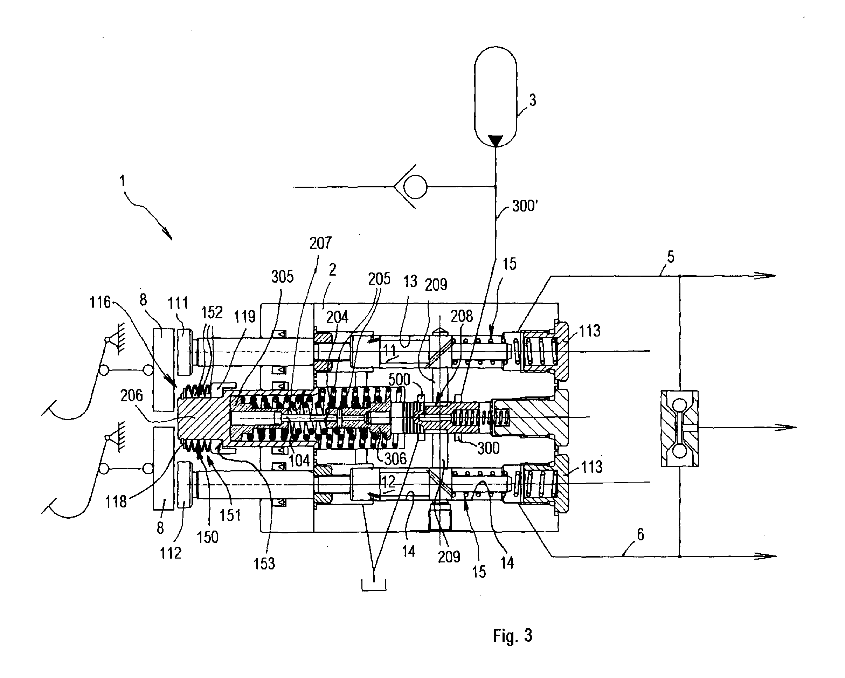

According to a third embodiment of the valve 1 illustrated in figure 3, the second seats 13 and 14 have a sole open end, namely the one for the leakproof passage of the heads 111 and 112, whilst the counterposed ends are closed with relative plugs 113; in this case it is the first cursor 4 that is equipped with opposing means of its active sliding stroke, indicated for the sake of greater clarity as 116.

According to the third embodiment of the valve 1, opposing means 116 comprises a first perimeter collar 118 that is fixed at a blind protruding end of the bowl 206, and a second collar 119 that is slidingly mounted in a direction that is axial on the protruding end, in such a way that between them a concave annular seat 150 of variable amplitude remains defined.

In the annular seat 150 elastic means 151 is positionable that is preloaded or loadable by compression, which is contained between the first collar 118 and the second collar 119.

Elastic means 151 that is preloaded or loadable by compression comprises (see figure 3) a series of Belleville washers 152 that are placed near one another on the protruding end of the bowl 206.

According to an alternative embodiment, which is not shown, elastic means 151 that is preloaded or loadable by compression comprises at least one helical spring the coils of which are wound on the protruding end of the bowl 206.

The latter forms a contrast and stop projection 153 of the second collar 119.

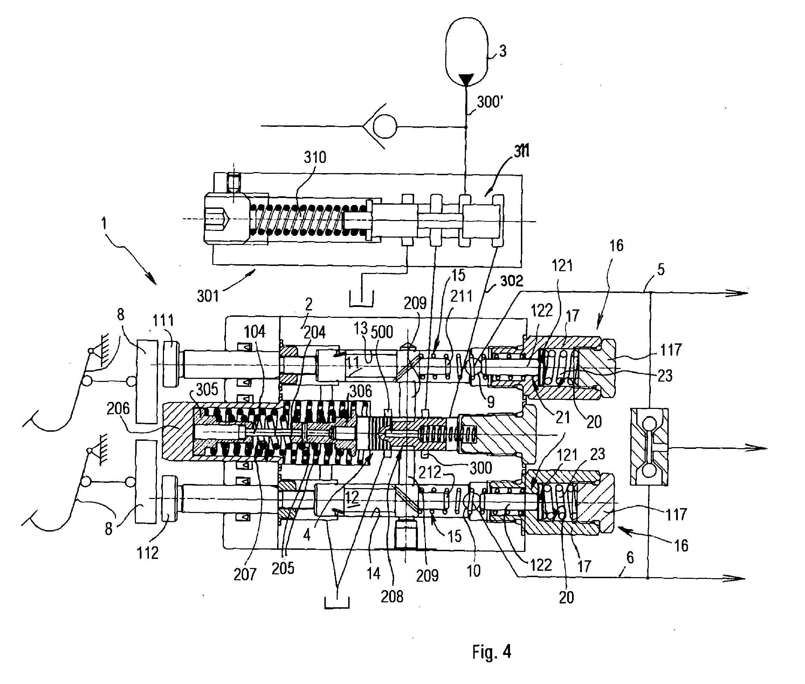

According to a fourth possible embodiment of the valve 1, illustrated in figure 4, the structure thereof is substantially identical to the first embodiment previously illustrated and disclosed in figure 1 with the difference that between the first source 3 and the valve body 2, or the pressurised fluid inlet space thereof, generally indicated as 300, second limiting valve means 301 is interposed suitable for limiting the absolute pressure value of the fluid; limiting valve means 301 is normally open and has a pre-settable intervention limit; it is also provided with a line 302 for measuring the pressure of the fluid directly inside the first seat 7.

The valve 1 operates as follows: the pressurised fluid, namely oil, from the accumulator 3 reaches inside the first sliding seat 7 of the first cursor 4, through the annular inlet opening 300.

When the driver presses the pedals 8 for braking, they come into contact with the heads 111 and 112 of the second cursors 11 and 12 and simultaneously with the base of the bowl 206, thereby pushing them together towards the righthand part of the sheet in relation to the viewer.

This shift is initially elastically contrasted only by the strength of the pair of springs 205 and makes cursor means 404 progressively close the unloading opening 500 and open the connection through the groove 208 between the annular inlet opening 300 and the secondary channels 209, allowing the progressive flow of pressurised oil to the second seats 13 and 14 through the passages 310 obtained in the second cursors 11 and 12 and from the latter to the two branches 5 and 6 of the braking system of a vehicle or of an operating machine, thereby initiating the braking action.

A first part of the stroke of the second cursors 11 and 12 is contrasted by the combined action of elastic means 15 and the pressure of the oil that covers the first seat 7, and the second seats 13 and 14, and which respectively acts on the cross-sections of the first cursor 4 and of the second cursors 11 and 12; when the ends 211 and 212 of the second cursors 11 and 12 make contact with counterposed tips 122 of the nail-shaped shutters 21 they start to push the latter, which, having their heads 121 resting against the preloaded springs 23, provide additional resistant action to that produced by elastic means 15 and the pressure: this additional resistant action is physically perceptible by the driver by means of the pedals 8.

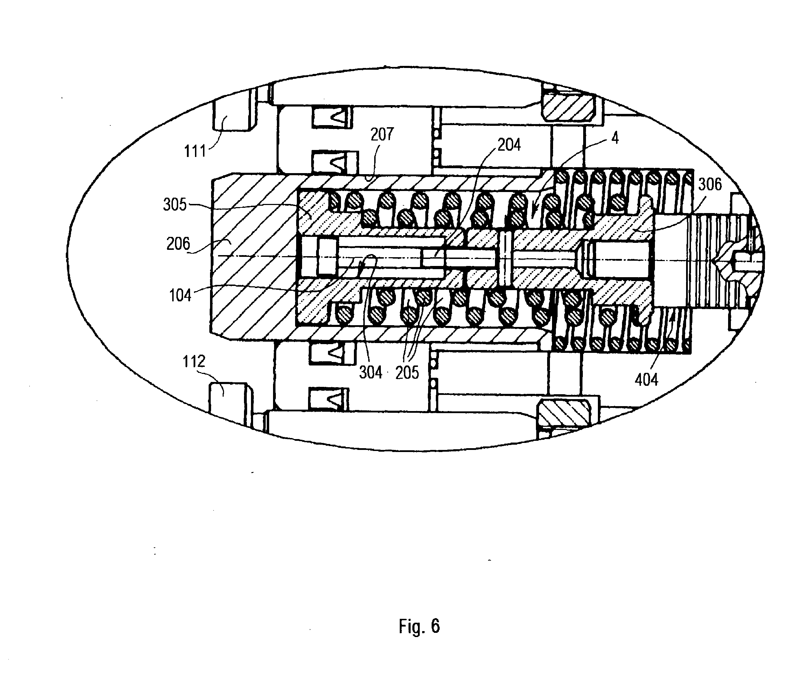

If the driver persists in pressing the pedals 8, braking becomes more incisive until the wheels are locked: the first cursor 4, being telescopic, progressively shortens (see figure 6) to allow direct frontal contact between the first buffer 305 and the second buffer 306.

This contact causes the shift of the first cursor 4 and complete alignment between the groove 208, the inlet opening 300 and the secondary channels 209: in this configuration, all the pressure possessed by the oil within the accumulator 3 is entirely transmitted to the two branches 5 and 6 of the braking system of the operating machine, thereby causing violent braking; on the contrary, if the driver does not need to carry out emergency braking, when he perceives the start of the intervention of contrasting means 16 owing to the hardening of the pedals 8, he interrupts pressure thereupon: in this way only the braking action provided by the reduced pressure of the oil modulated by the opening modulated by the progressive alignment between the annular groove 208, the secondary channels 209 and the inlet opening 300 is used.

The same choking, i.e. the total opening also occurs in the second possible embodiment of the valve 1, namely the embodiment that provides the fitting of Belleville washers 152 directly on the bowl 206 loadable when the first cursor 4 progresses, pushed by the pedals 8.

Also in this case, for a stroke preset of the first cursor 4, the Belleville springs 152 remain inactive and the annular groove 208 modulates opening, and therefore the connection between the inlet opening 300 and the secondary channels 209, providing a supply to the branches 5 and 6 of the braking system using the pressurised oil of normal operations.

By increasing pressure on the pedals 8, the reaction strength produced by the Belleville washers 152 is actuated and generated by the second collar 119 coming to a stop against the valve body 2: this causes the consequent sliding back of the second collar 119 onto the bowl 206, in the direction of the first fixed collar 118 and the consequent progressive compression of the Belleville washers 152.

Also in this case, the increase in reactive strength is perceived through the pedals 8 by the driver, who can thus realise that a braking action is about to start that uses the entire value of the oil pressure inside the accumulator 3, and which therefore becomes violent.

According to the fourth embodiment of the valve 1 illustrated in figure 4, second normally open limiting valve means 301 is pre-calibrated to a preset operating pressure by preloading the spring 310 provided for the purpose that thus contrasts the shutter 311 stroke with the strength produced by the operating pressure value.

When the pressure-measuring line 302 with take-up point directly inside the first sliding seat 7 of the first cursor 4 measures and transmits to second limiting valve means 301 a pressure value that is greater than the pre-calibrated operating value, the shutter 311 goes into a closed configuration, thus interrupting the delivery of pressurised oil that enters from the line 300' at the operating value, whilst conserving up to this limit the feed rapidity of the branches 5 and 6 of the determined braking system that the oil possesses within the accumulator 3.

It should lastly be pointed out that in the second embodiment of the valve 1 (see figure 2), the contact between the ends 211 and 212 of the second cursors 11 and 12 and the counterposed tips 122 of the nail-shaped shutters 21 causes the opening of the openings 19 through which an additional quantity of pressurised oil can flow that is contained in the accumulator 26 and which originates therefrom through the second feed line 25, thus increasing the supply of the branches 5 and 6 together with the oil coming from the accumulator 3.

## Claims

1. Valve (1) comprising:
- body means (2) having a first seat (7) wherein a first cursor (4) that is slidable in a first direction is received,
- a second seat (13) in said body means (2) that has an outlet (9) for a fluid and wherein a second cursor (11) that is slidable in a second direction is received,
- connecting conduit means (209) that connects said first seat (7) and said second seat (13), said first (4) and second cursor (11) being conformed in such a way as to check in respective axial positions a passage of said fluid from an inlet (300) in said first seat (7) to an outlet (9) in said second seat (13) through said connecting conduit means (209),
- contrasting means (16) acting on said second cursor (11) in such a way as to contrast a shift of said second cursor (11) in said second direction.

2. Valve (1), comprising:
- body means (2) having a first seat (7) wherein a first cursor (4) is received that has a first end (206) protruding from said body means (2) and is slidable in a first direction,
- a second seat (13) in said body means (2) that has an outlet (9) for a fluid and wherein a second cursor (11) that is slidable in a second direction is received,
- connecting conduit means (209) that connects said first seat (7) and said second seat (13), said first (4) and second cursor (11) being formed in such a way as to check in respective axial positions a passage of said fluid from an inlet (300) of said first seat (7) to an outlet (9) of said second seat (13) through said connecting conduit means (209),
- opposing means (116) fitted on said first protruding end (206).

3. Valve (1) according to claim 2, and furthermore comprising contrast means (16) acting on said second cursor (11) in such a way as to contrast a shift of said second cursor (11) in said second direction.

4. Valve according to claim 1, or 3, wherein said contrast means (16) comprises elastic means.

5. Valve (1) according to claim 1, or 3, or 4 when appended to claim 3, wherein said contrasting means (16) comprises:
- closing-plug means(17) of a respective second end of said second seat (13), equipped with tang means (18) that is screwable therein,
- an opening (19) obtained centrally in said plug means (17) and turned towards said second seat (13),
- a third hollow seat (20) obtained in said plug means (17) on the side opposite said tang means (18) and communicating coaxially with said opening (19), second closing plug means (117) of said third hollow seat (20),
- shutter means (21) slidingly mounted coaxially in said sopening (19), having a first end (121) received in said third hollow seat (20) and a second end (122) opposite said first end protruding from said opening (19) and counterposed to the concurrent end of said second cursor (11),
- at least one elastic means (22) located in said third seat (20) and contained between said first end (121) of said shutter (21) and said second closing plug means (117).

6. Valve (1) according to claim 5, wherein said second closing plug means (117) is axially crossed by a second space (24) of communication with the exterior of said body means (2) for the attachment of a supplementary second feed line (25) of pressurised fluid from a second source (26).

7. Valve (1) according to claim 2, wherein said opposing means (116) comprises:
- first perimeter collar means (118) fixed to said protruding end of said first cursor (4),
- at least one second perimeter collar means (119), slidingly fitted on said first end in such a way as to define with said first perimeter collar means (118) a concave annular seat (150) of variable width,
- at least one further elastic means (151) located in said concave annular seat (150) and contained between said first (118) and second perimeter collar means (119).

8. Valve (1) according to claim 7, wherein said first end forms a contrast and stop projection (153) of said second perimeter collar means (119).

9. Valve (1) according to any one of the previous claims, wherein said first seat (7) is connected to at least one limiting valve means (301), suitable for limiting the absolute pressure value of said fluid in said first seat (7) to a pre-settable value.

10. Valve (1), comprising:
- body means (2) having a first seat (7) wherein a first cursor (4) is received that has a first end (206) that is slidable in a first direction,
- a second seat (13) in said body means (2) that has an outlet (9) for a fluid and wherein is received a second cursor (11) that is slidable in a second direction,
- connecting conduit means (209) that connects said first seat (7) and said second seat (13), said first cursor (4) and second cursor (11) being conformed in such a way as to check in respective axial positions a passage of said fluid from said first seat (7) to said second seat (13) through said connecting conduit means (209),
- contrasting means (16) acting on said second cursor (11) in such a way as to contrast a shift of said second cursor (11) in said second direction,
**characterised in that** said first seat (7) is connected to at least one limiting valve means (301) suitable for limiting the absolute pressure value of said fluid in said first seat (7) to a pre-settable value.

11. Valve (1) according to claim 9, or 10, wherein said limiting valve means (301) is normally open.

12. Valve (1) according to any one of the claims 9 to 11, wherein said limiting valve means (301) is equipped with at least one organ of detection (302) of said absolute pressure value in said first seat (7).
